# EUROPÄISCHE PATENTSCHRIFT

(11) **EP 1 397 736 B1**
(45) Veröffentlichungstag und Bekanntmachung des Hinweises auf die Patenterteilung: **13.02.2008**
(21) Anmeldenummer: 02742727.7
(22) Anmeldetag: 08.05.2002
(51) Int. Cl.: G06F 21/00

(54) **VERFAHREN ZUM BETREIBEN EINES STEUERGERÄTS**
METHOD FOR OPERATING A CONTROL DEVICE
PROCEDE POUR FAIRE FONCTIONNER UN APPAREIL DE COMMANDE

(30) Priorität: 12.05.2001 DE 10123170
(43) Veröffentlichungstag der Anmeldung: 17.03.2004
(73) Patentinhaber: ROBERT BOSCH GMBH, 70442 Stuttgart (DE)
(72) Erfinder: TENBUSCH, Eberhard, 71665 Vaihingen (DE)
(86) Internationale Anmeldenummer: PCT/DE2002/001663
(87) Internationale Veröffentlichungsnummer: WO 2002/093329

(56) Entgegenhaltungen:
- EP-A- 0 918 275
- EP-A- 0 997 807
- US-A- 5 844 986
- US-A- 5 956 408

## Beschreibung

Die vorliegende Erfindung betrifft ein Verfahren zum Betreiben eines Steuergeräts. Das Steuergerät dient insbesondere zur Steuerung oder Regelung einer Funktion eines Kraftfahrzeugs. Das Steuergerät umfasst eine programmierbare Speichereinrichtung. Die Steuerung oder Regelung der Kraftfahrzeugfunktion wird unter Ausführung eines zumindest teilweise in der Speichereinrichtung abgelegten Computerprogramms und unter Verwendung von zumindest teilweise in der Speichereinrichtung abgelegten Daten realsiert.

Die Erfindung betrifft auch eine Speichereinrichtung für ein Steuergerät insbesondere eines Kraftfahrzeugs. Dabei ist auf der Speichereinrichtung ein Steuerprogramm abgespeichert, das auf einem Rechengerät des Steuergeräts, insbesondere auf einem Mikroprozessor, ablauffähig ist. Als Speichereinrichtung kann insbesondere ein elektrisches Speichermedium zur Anwendung kommen, bspw. ein Read-Only-Memory, ein Random-Access-Memory oder ein Flash-Memory.

Die vorliegende Erfindung betrifft außerdem ein Steuerprogramm, das auf einem Rechengerät, insbesondere auf einem Mikroprozessor, eines Steuergeräts ablauffähig ist.

Die Erfindung betrifft schließlich auch ein Steuergerät insbesondere zur Steuerung oder Regelung einer Funktion eines Kraftfahrzeugs. Das Steuergerät umfasst eine programmierbare Speichereinrichtung, in der ein Computerprogramm und Daten zumindest teilweise abgelegt sind, und ein Rechengerät, insbesondere einen Mikroprozessor. Das Computerprogramm ist zur Realisierung der Steuerung oder Regelung unter Verwendung der Daten auf dem Rechengerät ausführbar.

### Stand der Technik

Ein derartiges Steuergerät und ein Verfahren zum Betrieb eines Steuergeräts der eingangs genannten Art sind aus dem Stand der Technik bekannt. Die Steuergeräte dienen bspw. zur Steuerung bzw. Regelung einer Brennkraftmaschine, eines Getriebes, eines Steer-by-Wire-Systems, einer Klimatisierungsautomatik u.s.w. eines Kraftfahrzeugs. Bei der Speichereinrichtung eines Steuergeräts muss einerseits die Möglichkeit bestehen, das in der Speichereinrichtung abgelegte Computerprogramm und die dann abgelegten Daten von Zeit zu Zeit ändern zu können, bspw. damit neue Programmversionen oder geänderte Grenzwerte für eine Regelung oder Steuerung realisiert werden können. Dazu werden die Speicherbereiche der Speichereinrichtung, in denen das Computerprogramm und/oder die Daten abgelegt sind, gelöscht und durch ein geändertes Computerprogramm und/oder durch geänderte Daten überschrieben. Andererseits muss jedoch verhindert werden, dass unbefugte Personen ein manipuliertes Computerprogramm und/oder manipulierte Daten in der Speichereinrichtung ablegen, da es sonst zu einer Fehlfunktion des Steuergeräts bis hin zu einem Defekt der zu steuernden bzw. zu regelnden Baugruppen kommen kann.

Aus der DE 196 19 354 A1 ist ein Verfahren bekannt, einen Programmiervorgang in der Weise abzusichern, dass genau die Bytes in das Steuergerät programmiert werden, die auch in einer Programmierdatei stehen. Bei dem beschriebenen Verfahren handelt es sich um ein vereinfachtes Checksummenverfahren. Dabei werden zeitgleich mit dem Computerprogramm und den Daten sog. Selbststeuerdaten in die Speichereinrichtung des Steuergeräts geschrieben. Da es zeitlich zu aufwendig ist, jedes programmierte Byte in eine Checksummenrechnung einzubeziehen, werden stichprobenartig einzelne Bytes oder Bytemuster entnommen, um anhand dieser die ordnungsgemäße Programmierung der Speichereinrichtung zu prüfen. Diese ist gegeben, wenn alle Selbststeuerdaten in den entsprechenden Speicherbereichen gefunden werden. Das bekannte Verfahren sichert also nur den eigentlichen Programmiervorgang. Es schützt nicht vor der Programmierung der Speichereinrichtung mit einem manipulierten Computerprogramm und/oder manipulierten Daten. Ebensowenig schützt es vor der Ausführung eines manipulierten Computerprogramms und der Verwendung manipulierter Daten. Da die Selbststeuerdaten Bestandteil des Computerprogramms bzw. des Datenstroms sind, können die Selbststeuerdaten von einer unbefugten Personen relativ problemlos dahingehend manipuliert werden, dass trotz eines manipulierten Computerprogramms bzw. manipulierter Daten eine ordnungsgemäße Programmierung der Speichereinrichtung erkannt und das manipulierte Computerprogramm unter Verwendung der manipulierten Daten ausgeführt wird.

Aus der DE 196 23 145 A1 ist ein Verfahren zum Verhindern einer versehentlichen Ausführung einer Lösch- und/oder Programmierroutine eines Steuerprogramms für eine Speichereinrichtung eines Steuergeräts bekannt. Dies wird dadurch erreicht, dass vor der Ausführung einer Lösch-und/oder Programmierroutine des Steuerprogramms andere Programmteile (sog. Unlocksequenzen) ausgeführt oder Passwörter eingegeben werden müssen. Darüber hinaus wird offenbart, vor der Ausführung einer Lösch- und/oder Programmierroutine zu überprüfen, ob ein aktiviertes Test- bzw. Programmiergerät angeschlossen ist. Ein weiterer Schutz vor unbeabsichtigtem Überschreiben eines in der Speichereinrichtung eines Steuergeräts abgelegten Computerprogramms und/oder darin abgelegter Daten wird dadurch erreicht, dass der ausführbare Code des Computerprogramms und/oder die Daten außerhalb ihrer Bestimmungsadresse abgelegt sind. So wird bspw. empfohlen, ein RAM-Programm außerhalb des RAMs abzulegen, so dass das Programm vor der Ausführung in den RAM kopiert werden muss. Mit dem bekannten Verfahren kann jedoch die Ausführung eines in der Speichereinrichtung abgelegten geänderten Computerprogramms und/oder die Verwendung von darin abgelegten geänderten Daten nicht verhindert werden.

Der vorliegenden Erfindung liegt die Aufgabe zu Grunde, einen möglichst effizienten Schutz vor einer Manipulation des Inhalts einer Speichereinrichtung eines Steuergeräts durch eine unbefugte Person zu bieten.

Ein Verfahren gemäß dem Präambel des Anspruchs 1 wird in der Patentschrift US-A-5 844 986 beschrieben.

Die Erfindung betriff ein Verfahren gemäß Patentanspruch 1, und ein Steuergerät gemäß Patentanspruch 15. Weiteren Ausführungsformen der Erfindung sind in den abhängigen Patentansprüche spezifiziert.

### Vorteile der Erfindung

Erfindungsgemäß wird also vorgeschlagen, nach einer Umprogrammierung des Computerprogramms und/oder der Daten das neue Computerprogramm bzw. die neuen Daten so lange zu blockieren, bis die Verifikation des Computerprogramms bzw. der Daten erfolgreich abgeschlossen worden ist. Es wird also nicht die Programmierung an sich, sondern die Ausführung des Programms bzw. die Verwendung der Daten verhindert, falls diese aufgrund der Verifikation als von einer unberechtigten Person manipuliert erkannt werden. Die Verifikation kann vor jedem Ausführen eines geänderten Computerprogramms bzw. vor jeder Verwendung von.geänderten Daten, oder aber in beliebig wählbaren Abständen (z.B. zufällig oder regelmäßig in Abhängigkeit von der Fahrleistung des Kraftfahrzeugs, von der Fahrtzeit, von der absoluten Zeit oder von der Anzahl der Ausführungen des Computerprogramms) durchgeführt werden. Eine fehlgeschlagene Verifikation des geänderten Computerprogramms oder der geänderten Daten kann bis auf weiteres eine Ausführung lediglich des geänderten Teils des Computerprogramms oder aber des gesamten Computerprogramms und eine Verwendung lediglich der geänderten Daten oder aber der gesamten Daten blockieren.

Die Speichereinrichtung ist bspw. als ein nichtflüchtiges, wiederbeschreibbares Speicherelement, insbesondere als ein Flash-EPROM (electronically programmable random access memory) ausgebildet. Die Verifikation des geänderten Computerprogramms und/oder der geänderten Daten wird bspw. in Form eines Steuerprogramms realisiert, das ebenfalls in dem Speicherelement abgelegt ist. Das Computerprogramm umfasst ein sog. Fahrprogramm, durch dessen Ausführung die dem Steuergerät zugeordnete Steuerungs- oder Regelungsfunktion erfüllt wird, und ein Steuerprogramm, das für das Löschen und Programmieren der Speicherbereiche und für die Prüfung der in den Speicherbereichen abzulegenden geänderten Programme oder Daten zuständig ist.

Gemäß einer vorteilhaften Weiterbildung der vorliegenden Erfindung wird vorgeschlagen, dass im Rahmen der Änderung des Computerprogramms und der Daten zumindest derjenige Speicherbereich der Speichereinrichtung gelöscht wird, in dem das Computerprogramm und/oder die Daten abgelegt sind, und danach das geänderte Computerprogramm und/oder die geänderten Daten in der Speichereinrichtung abgelegt werden. Ein Speicherbereich umfasst üblicherweise mindestens einen Sektor, d.h. 32 kbit. Wenn bei einem Flash-EPROM nur einzelne Bytes eines Speicherbereichs und nicht der gesamte Speicherbereich geändert werden soll, kann zunächst der gesamte Inhalt des entsprechenden Speicherbereichs in einen Zwischenspeicher, bspw. ein RAM (random access memory), kopiert werden. Dort werden dann die entsprechenden Bytes geändert, der Speicherbereich gelöscht und dann der gesamte geänderte Inhalt wieder in den Speicherbereich programmiert.

Gemäß einer bevorzugten Ausführungsform der vorliegenden Erfindung wird vorgeschlagen, dass das zumindest teilweise Löschen der Speichereinrichtung und das Ablegen des geänderten Computerprogramms und/oder der geänderten Daten in der Speichereinrichtung von einem Steuerprogramm veranlasst wird, das ebenfalls in der Speichereinrichtung abgelegt ist. Das Steuerprogramm bekommt einen Befehl zur Neuprogrammierung eines bestimmten Speicherbereichs oder eines Teils davon bspw. von einer außerhalb des Steuergeräts angeordneten externen Programmiervorrichtung. Das Steuerprogramm kann dann den entsprechenden Speicherbereich oder einen Teil davon löschen und mit dem geänderten Computerprogramm oder den geänderten Daten neu programmieren. Nach der Änderung des Computerprogramms oder der Daten verifiziert das Steuerprogramm den geänderten Inhalt des entsprechenden Speicherbereichs oder eines Teils davon und ermöglicht erst nach einer erfolgreichen Verifikation des geänderten Inhalts die Ausführung des Computerprogramms oder eine Verwendung der Daten.

Vor der Änderung eines Speicherbereichs oder eines Teils davon wird das Steuerprogramm als eine Sicherungskopie (sog. Backup) in einen Speicherbereich außerhalb des zu löschenden Speicherbereichs oder des zu löschenden Teils davon kopiert. Es wird vorgeschlagen, dass ein Löschen eines Speicherbereichs, in dem das Computerprogramm oder die Daten abgelegt sind, nur veranlasst wird, falls das Steuerprogramm als ein Backup in einen Speicherbereich außerhalb des zu löschenden Speicherbereichs erfolgreich kopiert worden ist. Die Änderung des Inhalts eines Speicherbereichs oder eines Teils davon wird durch das Backup veranlasst. Durch das Erstellen des Backups kann sichergestellt werden, dass auch nach einer Änderung eines Computerprogramms bzw. von Daten mit Sicherheit noch ein Steuerprogramm für die Änderung des Inhalts des Speicherbereichs oder eines Teils davon vorhanden ist.

Vorteilhafterweise wird zusammen mit dem geänderten Computerprogramm oder mit den geänderten Daten auch ein geändertes Steuerprogramm in der Speichereinrichtung abgelegt. Das geänderte Steuerprogramm wird zunächst von dem Backup geprüft. Erst danach übernimmt es vor einer späteren Ausführung des geänderten Computerprogramms die Verifikation der Speicherbereiche, in denen das geänderte Computerprogramm und/oder die geänderten Daten abgelegt sind. In Abhängigkeit von dem Ergebnis der Verifikation (erfolgreich oder nicht) ist eine Ausführung des geänderten Computerprogramms bzw, eine Verwendung der geänderten Daten möglich oder nicht.

Falls das Computerprogramm und/oder die Daten geändert werden sollen, wird zunächst das Backup des alten Steuerprogramms erstellt. Das Backup löscht das alte Computerprogramm (einschließlich des alten Steuerprogramms) und/oder die alten Daten. Danach programmiert das Backup das neue Computerprogramm (einschließlich des neuen Steuerprogramms). Erst wenn das neue Computerprogramm in dem entsprechenden Speicherbereich des Steuergeräts programmiert ist, wird es danach ebenfalls von dem Backup geprüft und ggf. gültig gestempelt. Bei einem gültigen neuen Computerprogramm ist auch das neue Steuerprogramm gültig. Ein nachfolgendes Löschen, Programmieren, Prüfen und ggf. Gültigerklären des Datenbereichs wird dann von dem gültigen neuen Steuerprogramm übernommen. Alternativ kann das Backup auch das Löschen, Programmieren, Prüfen und ggf. Gültigerklären sowohl des Computerprogrammbereichs als auch des Datenbereichs übernehmen. Das setzt jedoch voraus, dass das Backup in einem Speicherberich außerhalb des Computerprogrammbereichs und des Datenbereichs abgelegt ist.

Falls das Löschen, Programmieren, Prüfen und ggf. Gültigerklären des Computerprogrammbereichs von dem Backup und das Löschen, Programmieren, Prüfen und ggf. Gültigerklären des Datenbereichs von dem geprüften neuen Steuerprogramm ausgeführt wird, wird vorgeschlagen, dass ein Löschen des Datenbereichs nur veranlasst wird, falls das geänderte Computerprogramm erfolgreich verifiziert worden ist.

Das Ablegen des geänderten Computerprogramms oder der geänderten Daten in der Speichereinrichtung wird vorzugsweise durch das Backup des Steuerprogramms veranlasst. Das Backup veranlasst auch die Verifikation des geänderten Computerprogramms und/oder der geänderten Daten.

Gemäß einer anderen bevorzugten Ausführungsform der vorliegenden Erfindung wird vorgeschlagen, dass die Verifikation des in dem ursprünglich noch nicht neu programmierten Speicherbereich abgelegten geänderten Computerprogramms oder der dort abgelegten geänderten Daten von der Sicherungskopie des Steuerprogramms (Backup) veranlasst wird, das zusammen mit dem geänderten Computerprogramm und/oder den geänderten Daten in der Speichereinrichtung abgelegt worden ist.

Vorteilhafterweise wird das Ergebnis der Verifikation nichtflüchtig in dem Steuergerät abgelegt. Das Ergebnis wird vorzugsweise in der Speichereinrichtung des Steuergeräts abgelegt. Das Ablegen des Ergebnis wird durch das Backup des Steuerprogramms veranlasst. Vor dem Ausführen des geänderten Programms bzw. vor der Verwendung der geänderten Daten wird von dem Backup zunächst überprüft, ob ein vorgegebenes Ergebnis der Verifikation in dem Steuergerät abgelegt ist.

Vorzugsweise ist das Ergebnis der Verifikation als ein oder mehrere Prüfmuster ausgebildet, die an vorgegebenen Stellen in denjenigen Speicherbereichen der Speichereinrichtung abgelegt werden, die erfolgreich verifiziert worden sind. Bei einer Umprogrammierung werden diese Speicherbereiche automatisch gelöscht. Die Speicherbereiche können nur von dem Steuergerät selbst, also von innen, programmiert werden. Eine Programmierung von außen ist nicht möglich, da die Speicherbereiche von außen nicht adressierbar sind.

Vor einem Ausführen des geänderten Programms bzw. vor einer Verwendung der geänderten Daten wird dann überprüft, ob die richtigen Prüfmuster an den richtigen Stellen in der Speichereinrichtung abgelegt sind. Gemäß einer bevorzugten Ausführungsform der Erfindung wird zur Verifikation des geänderten Computerprogramms oder der geänderten Daten der Inhalt an den vorgegebenen Stellen derjenigen Speicherbereiche überprüft, in denen das geänderte Computerprogramm oder die geänderten Daten abgelegt worden sind. Da das geänderte Steuerprogramm Teil des geänderten Computerprogramms ist, ist das geänderte Steuerprogramm über das geänderte Computerprogramm abgesichert.

Vorteilhafterweise wird zur Verifikation des geänderten Computerprogramms oder der geänderten Daten eine Checksummenrechnung oder eine Signaturprüfung ausgeführt.

Von besonderer Bedeutung ist die Realisierung des erfindungsgemäßen Verfahrens in der Form einer Speichereinrichtung für ein Steuergerät insbesondere eines Kraftfahrzeugs. Dabei ist auf der Speichereinrichtung ein Steuerprogramm abgespeichert, das auf einem Rechengerät des Steuergeräts, insbesondere auf einem Mikroprozessor, ablauffähig und zur Ausführung des erfindungsgemäßen Verfahrens geeignet ist. In diesem Fall wird also die Erfindung durch ein auf der Speichereinrichtung abgespeichertes Steuerprogramm realisiert, so dass diese mit dem Programm versehene Speichereinrichtung in gleicher Weise die Erfindung darstellt wie das Verfahren, zu dessen Ausführung das Steuerprogramm geeignet ist. Als Speichereinrichtung kann insbesondere ein elektrisches Speichermedium zur Anwendung kommen, bspw. ein Read-Only-Memory, ein Random-Access-Memory oder ein Flash-Memory.

Die Erfindung betrifft auch ein Steuerprogramm der eingangs genannten Art, das zur Ausführung des erfindungsgemäßen Verfahrens geeignet ist, wenn es auf dem Rechengerät abläuft. Besonders bevorzugt ist dabei, wenn das Steuerprogramm auf einer Speichereinrichtung, insbesondere auf einem Flash-Memory, abgespeichert ist.

Als eine weitere Lösung der Aufgabe der vorliegenden Erfindung wird ausgehend von dem Steuergerät der eingangs genannten Art vorgeschlagen, dass in dem Steuergerät Mittel vorgesehen sind, um zumindest nach einer Änderung des in der Speichereinrichtung abgelegten Computerprogramms oder der in der Speichereinrichtung abgelegten Daten eine Verifikation des geänderten Computerprogramms und/oder der geänderten Daten durchzuführen und um eine Ausführung des geänderten Computerprogramms und/oder eine Verwendung der geänderten Daten so lange zu verhindern, bis das geänderte Computerprogramm und/oder die geänderten Daten erfolgreich verifiziert worden sind. Diese Mittel sind vorzugsweise in Form einer Erweiterung für ein Steuerprogramm softwaremäßig realisiert.

Gemäß einer vorteilhaften Weiterbildung der Erfindung wird vorgeschlagen, dass das Steuergerät weitere Mittel zur Ausführung des erfindungsgemäßen Verfahrens aufweist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: eine erfindungsgemäße Speichereinrichtung im Ausschnitt;
- Figur 2: ein erfindungsgemäßes Steuergerät; und
- Figur 3: ein Ablaufdiagramm eines erfindungsgemäßen Verfahrens.

### Beschreibung der Ausführungsbeispiele

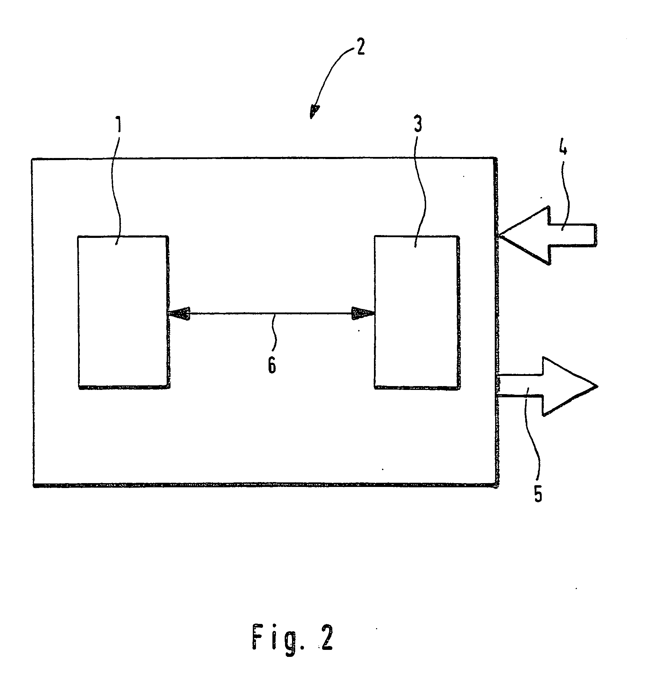

In Fig. 2 ist ein erfindungsgemäßes Steuergerät zur Steuerung und/oder Regelung von Funktionen in einem Kraftfahrzeug in seiner Gesamtheit mit dem Bezugszeichen 2 bezeichnet. Das Steuergerät 2 umfasst eine Speichereinrichtung 1 und ein Rechengerät 3, insbesondere einen Mikroprozessor. An dem Steuergerät 2 liegen Eingangssignale 4 von Sensoren und Messwertaufnehmern an, die dem Steuergerät 2 Informationen über den Zustand des Kraftfahrzeugs oder der zu steuernden bzw. zu regelnden Funktionen geben. Das Steuergerät 2 ermittelt Ausgangssignale 5 zur Ansteuerung von Aktoren zur Beeinflussung der zu steuernden bzw. zu regelnden Kraftfahrzeugfunktionen. Die Ausgangssignale 5 werden anhand eines auf der Speichereinrichtung 1 abgespeicherten und auf dem Rechengerät 3 ablauffähigen Computerprogramms unter Verwendung von ebenfalls auf der Speichereinrichtung 1 abgespeicherten Daten in Abhängigkeit von den Eingangssignalen 4 ermittelt. Zwischen der Speichereinrichtung 1 und dem Rechengerät 3 ist eine Datenübertragungsleitung 6 angeordnet. Zur Ausführung des Computerprogramms wird dieses entweder als ganzes oder befehlsweise über die Datenübertragungsleitung 6 aus der Speichereinrichtung 1 in das Rechengerät 3 übertragen. Ebenso werden über die Leitung 6 Daten aus der Speichereinrichtung 1 an das Rechengerät 3 zur Abarbeitung und neu berechnete Daten von dem Rechengerät 3 an die Speichereinrichtung 1 zur Speicherung übertragen.

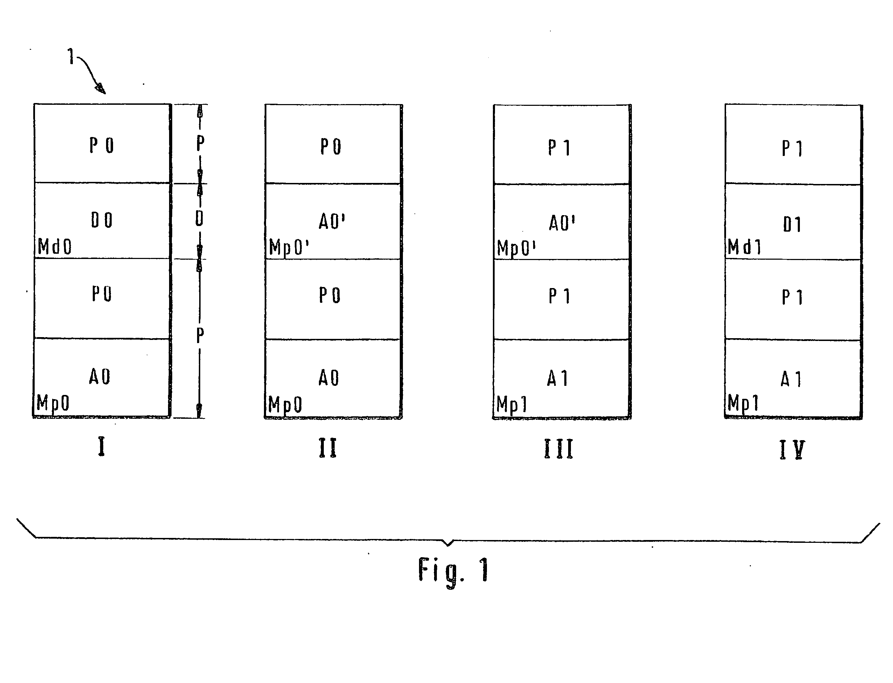

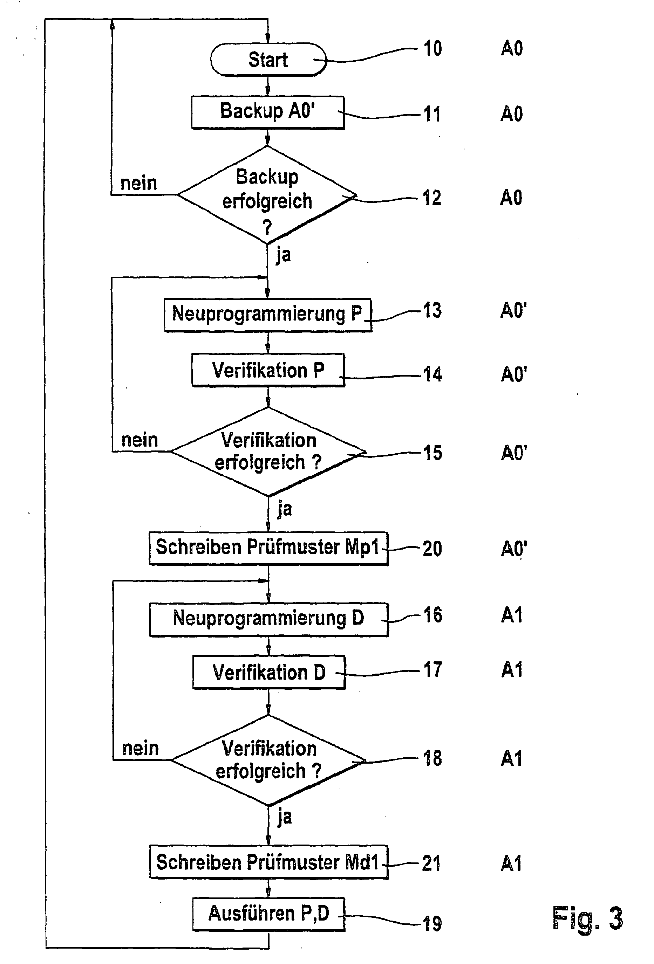

In Fig. 1 ist ein Ausschnitt der erfindungsgemäßen Speichereinrichtung 1 in vier verschiedenen Schritten I bis IV während der Ausführung eines erfindungsgemäßen Verfahrens dargestellt. Ein Ablaufdiagramm des erfindungsgemäßen Verfahrens ist in Fig. 3 dargestellt. Rechts neben den Funktions- und Abfrageblöcken in Fig. 3 ist die Bezeichnung desjenigen Steuerprogramms A0, A0' oder A1 angegeben, das die entsprechenden Verfahrensschritte veranlasst.

Die Speichereinrichtung 1 umfasst zwei voneinander unabhängige Speicherbereiche P und D. Ein Speicherbereich umfasst üblicherweise mindestens einen Sektor, d.h. 32 kbit. Der Speicherbereich P wird auch als Programmbereich bezeichnet und hat zu Beginn des Verfahrens den Inhalt P0, der für ein Computerprogramm steht, das in dem Speicherbereich P abgelegt ist. Der Speicherbereich D wird auch als Datenbereich bezeichnet und hat zu Beginn des Verfahrens den Inhalt D0, der für Daten steht, die in dem Speicherbereich D abgelegt sind. Der Speicherbereich P umfasst auch ein Steuerprogramm A0 mit Lösch- und Programmierroutinen zur Änderung des in der Speichereinrichtung 1 abgelegten Computerprogramms P0 oder der darin abgelegten Daten D0.

In den Speicherbereichen P und D sind an vorgegebenen Stellen Prüfmuster Mp0 und Md0 gespeichert, die zur Verifikation des in der Speichereinrichtung 1 abgelegten Computerprogramms P0 bzw. der dort abgelegten Daten D0 herangezogen werden. Wenn ein neues Computerprogramm P1 oder neue Daten D1 in der Speichereinrichtung 1 abgelegt werden, werden in den entsprechenden Speicherbereichen P und D auch neue Prüfmuster Mp1 und Md1 abgelegt. Die Prüfmuster Mp1 und Md1 werden während der Programmierung der Speicherbereiche P bzw. D ermittelt und in diesen abgelegt. Die Prüfmuster Mp0, Mp1 und Md0, Md1 sind nicht Bestandteil des in die Speicherbereiche P und D zu programmierenden Codes, gehören physikalisch gesehen aber dazu. Ein von einer Lösch- oder Programmierroutine auf diejenigen Stellen, an denen die Prüfmuster Mp0, Mp1 und Md0, Md1 abgelegt sind, abgesetzter Schreibbefehl wird ignoriert, so dass die Prüfmuster Mp0, Mp1 und Md0, Md1 von außen nicht manipuliert werden können.

Nachfolgend wird näher auf die Umprogrammierung der Speichereinrichtung 1 eingegangen. Ausgegangen wird von der in Schritt I dargestellten Speichereinrichtung 1. Die Speicherbereiche P und D werden nacheinander mit je einer Lösch- und Programmierroutine des Steuerprogramms mit den neuen Inhalten P1 und D1 überprogrammiert. Es ist jedoch ohne weiteres auch möglich, die Speicherbereiche P und D jeweils einzeln zu überschreiben ohne auch den anderen Speicherbereich D oder P zu überschreiben.

Durch Anlegen eines entsprechenden Befehls zur Umprogrammierung von außen mit Hilfe eines Test- oder Programmiergeräts wird das in Fig. 3 dargestellte Verfahren in einem Funktionsblock 10 gestartet. Zu Beginn der Neuprogrammierung wird in einem Funktionsblock 11 zunächst ein Backup A0' des Steuerprogramms A0 erstellt und in einem Speicherbereich D abgespeichert, der außerhalb des neu zu programmierenden Speicherbereichs P liegt (Schritt II). Das Backup A0' koordiniert dann die Neuprogrammierung des Speicherbereichs P. Ein Löschbefehl an den Speicherbereich P wird erst ausgeführt, wenn das Backup A0' in den Speicherbereich D erfolgreich vorgenommen worden ist. Ob das Backup A0' erfolgreich war oder nicht wird in einem Abfrageblock 12 überprüft.

Nach erfolgreichem Backup steuert A0' die Programmierung des Speicherbereichs P (Funktionsblock 13) mit dem Inhalt P1 (Schritt III). Das neue Computerprogramm P1 umfasst auch ein neues Steuerprogramm A1 mit neuen Lösch- und Programmierroutinen. Schließlich führt das Backup A0' des Steuerprogramms in einem Funktionsblock 14 eine Verifikation des neu programmierten Speicherbereichs P aus. Zur Verifikation wird bspw. eine Checksummenrechnung oder eine Signaturprüfung aller zuvor programmierten Bytes ausgeführt. In einem Abfrageblock 15 wird überprüft, ob die Verifikation des Speicherbereichs P erfolgreich war. Falls die Verifikation erfolgreich war, wird in einem Funktionsblock 20 ein Prüfmuster Mp1 an einer bestimmten Stelle in dem Speicherbereich P nichtflüchtig abgelegt. Das Ablegen des Prüfmusters Mp1 wird durch das Backup A0' des Steuerprogramms veranlasst. Bei einer Umprogrammierung werden die Speicherbereiche, in denen das Prüfmuster Mp1 abgelegt ist, automatisch gelöscht. Diese Speicherbereiche können nur von dem Steuergerät 2 selbst, also von innen, programmiert werden. Eine Programmierung von außen ist nicht möglich, da die Speicherbereiche von außen nicht adressierbar sind. Das Prüfmuster Mp1 ist entweder bereits bekannt oder wird in Abhängigkeit von dem neu abgelegten Computerprogramm P1 einschließlich dem neuen Steuerprogramm A1 ermittelt.

Vor jeder Ausführung des neuen Computerprogramms P1 oder vor jeder Nutzung der neuen Daten D1 wird statt einer Überprüfung des gesamten Speicherbereichs P, D lediglich überprüft, ob das richtige Prüfmuster Mp1 an der richtigen Stelle in dem Speicherbereich abgelegt ist. Das Prüfmuster Mp1 ist ein Gültigstempel, der aussagt, dass der ihm zugeordnete Speicherbereich P1 einschließlich A1 in allen programmierten Bytes richtig ist. Das Prüfmuster Mp1 ist damit ein Ersatz für eine komplette Checksummenprüfung aller programmierten Bytes bei jedem Hochfahren des Steuergeräts 2, weil eine komplette Prüfung des Steuergeräts 2 viel mehr Zeit beansprucht als lediglich die Prüfung des Prüfmusters Mp1.

Die Neuprogrammierung des Speicherbereichs D wird von dem Backup A0' so lange verhindert, bis der gesamte Speicherbereich P mit dem Inhalt P1 inkl. des neuen Steuerprogramms A1 erfolgreich verifiziert worden ist.

Die Neuprogrammierung des Speicherbereichs D wird dann von dem neuen Steuerprogramm A1 ausgeführt, das in dem vorherigen Schritt für gültig und richtig erklärt worden ist: Sobald der Speicherbereich P erfolgreich verifiziert worden ist, wird der Speicherbereich D bzw. das darin gespeicherte Backup A0' gelöscht und mit den neuen Daten D1 überschrieben (Funktionsblock 16). Schließlich führt das neue Steuerprogramm A1 in einem Funktionsblock 17 eine Verifikation des neu programmierten Speicherbereichs D aus. In einem Abfrageblock 18 wird eine erfolgreiche Verifikation des Speicherbereichs D überprüft. Falls die Verifikation erfolgreich war, wird in einem Funktionsblock 21 ein Prüfmuster Md1 in einem Teil des Speicherbereichs D abgelegt. Vor der Nutzung der neuen Daten D1 wird nicht der gesamte Speicherbereich D auf Richtigkeit und Gültigkeit überprüft. Es wird vielmehr lediglich überprüft, ob das richtige Prüfmuster Md1 an der richtigen Stelle in dem Speicherbereich D abgelegt ist.

Die Gesamtkonfiguration bestehend aus neuem Computerprogramm P1 und neuen Daten D1 ist erst dann lauffähig, wenn sowohl das neue Computerprogramm P1 als auch die neuen Daten D1 erfolgreich verifiziert worden sind. Das Ausführen des Computerprogramms P1 unter Verwendung der Daten D1 ist in Funktionsblock 19 dargestellt. Anschließend wird wieder zum Beginn des Verfahrens zu dem Funktionsblock 10 verzweigt. Eine weitere Verifikation der Speicherbereiche P und/oder D kann vor jeder weiteren Ausführung des neuen Computerprogramms P1 unter Verwendung der neuen Daten D1 oder aber in regelmäßigen oder unregelmäßigen Abständen ausgeführt werden. Die Prüfmuster Mp1, Md1 werden nichtflüchtig in der Speichereinrichtung 1 des Steuergeräts 2 gespeichert, damit diese Information nach einem erneuten Hochfahren (Reset) des Steuergeräts 2 zur Verfügung steht.

Falls zu Beginn des Verfahrens das Backup A0' des Steuerprogramms nicht erfolgreich erstellt wird (Abfrageblock 12), wird das Löschen und somit auch die Neuprogrammierung des Speicherbereichs P verweigert, so dass dort das Steuerprogramm A0 aktiv bleibt. Falls die Verifikation des Speicherbereichs P fehlschlägt (Abfrageblock 15), wird das Löschen und somit auch die Neuprogrammierung des Speicherbereichs D verweigert, so dass dort das Backup A0' des Steuerprogramms aktiv bleibt. Wird dagegen der Speicherbereich P erfolgreich verifiziert, die Verifikation des Speicherbereichs D schlägt jedoch fehl (Abfrageblock 18), wird das Computerprogramm P1 gar nicht oder nicht unter Verwendung der neuen Daten D1 ausgeführt. Als einziges kann das neue Steuerprogramm A1 zur evtl. Neuprogrammierung des Speicherbereichs D mit gültigen Daten D1 ausgeführt werden. Die Verifikation der neu programmierten Speicherbereiche P und D in den Funktionsblöcken 14 und 17 kann in Form einer Checksummenrechnung oder einer Signaturprüfung erfolgen.

## Patentansprüche

1. Verfahren zum Betreiben eines Steuergeräts (2) zur Steuerung oder Regelung einer Funktion, mit einer programmierbaren Speichereinrichtung (1), wobei die Steuerung oder Regelung unter Ausführung eines zumindest teilweise in einem Speicherbereich der Speichereinrichtung (1) abgelegten Computerprogramms (P0) und unter Verwendung von zumindest teilweise in einem Speicherbereich der Speichereinrichtung (1) abgelegten Daten (D0) realisiert wird, wobei zumindest nach einer Änderung des in dem Speicherbereich der Speichereinrichtung (1) abgelegten Computerprogramms (P0) oder der in dem Speicherbereich der Speichereinrichtung (1) abgelegten Daten (D0) das geänderte Computerprogramm (P1) nur ausgeführt wird oder die geänderten Daten (D1) nur verwendet werden, falls das geänderte Computerprogramm (P1) oder die geänderten Daten (D1) erfolgreich verifiziert worden sind, **dadurch gekennzeichnet, dass** das Steuergerät (2) zur Steuerung oder Regelung einer Funktion eines Kraftfahrzeugs dient und dass die Änderung des Computerprogramms (P0) oder der Daten (D0) von einem Steuerprogramm (A0') veranlasst wird, das ebenfalls in der Speichereinrichtung (1) abgelegt ist, wobei vor der Änderung des Computerprogramms (P0) oder der Daten (D0) in dem Speicherbereich der Speichereinrichtung (1) ein in dem zu ändernden Speicherbereich der Speichereinrichtung (1) abgelegtes Steuerprogramm (A0) als Backup (A0') in einen anderen Speicherbereich der Speichereinrichtung (1) außerhalb des im Rahmen der Änderung des Computerprogramms (P0) oder der Daten (D0) zu ändernden Speicherbereichs kopiert wird.

2. Verfahren nach Anspruch 1, **dadurch gekennzeichnet, dass** im Rahmen der Änderung des Computerprogramms (P0) oder der Daten (D0) zumindest derjenige Speicherbereich (P, D) der Speichereinrichtung (1) gelöscht wird, in dem das Computerprogramm (P0) oder die Daten (D0) abgelegt sind, und danach das geänderte Computerprogramm (P1) oder die geänderten Daten (D1) in der Speichereinrichtung (1) abgelegt werden.

3. Verfahren nach Anspruch 1 oder 2, **dadurch gekennzeichnet, dass** ein Löschen eines Speicherbereichs (P), in dem das Computerprogramm (P0) oder die Daten abgelegt sind, nur veranlasst wird, falls das Steuerprogramm (A0) als ein Backup (A0') in einen Speicherbereich (D) außerhalb des zu löschenden Speicherbereichs (P) erfolgreich kopiert worden ist.

4. Verfahren nach Anspruch einem der Ansprüche 1 bis 3, **dadurch gekennzeichnet, dass** mit dem geänderten Computerprogramm (P1) oder mit den geänderten Daten (D1) ein geändertes Steuerprogramm (A1) in der Speichereinrichtung (1) abgelegt wird.

5. Verfahren nach Anspruch 4, **dadurch gekennzeichnet, dass** nach einem Neuprogrammieren eines Speicherbereichs (P) für das Computerprogramm ein Löschen und Programmieren eines Speicherbereichs (D) für die Daten nur veranlasst wird, falls das geänderte Computerprogramm (P1) erfolgreich verifiziert worden ist.

6. Verfahren nach einem der Ansprüche 1 bis 5, **dadurch gekennzeichnet, dass** das Ablegen des geänderten Computerprogramms (P1) oder der geänderten Daten (D1) in der Speichereinrichtung (1) durch das Backup (A0') veranlasst wird.

7. Verfahren nach Anspruch 5, **dadurch gekennzeichnet, dass** die Verifikation des in dem ursprünglich noch nicht neu programmierten Speicherbereich (D) abgelegten geänderten Computerprogramms oder der dort abgelegten geänderten Daten (D1) von dem geänderten Steuerprogramm (A1) veranlasst wird.

8. Verfahren nach einem der Ansprüche 1 bis 7, **dadurch gekennzeichnet, dass** das Ergebnis (Mp1, Md1) der Verifikation nichtflüchtig in dem Steuergerät (2) abgelegt wird.

9. Verfahren nach Anspruch 8, **dadurch gekennzeichnet, dass** Prüfmuster (Mp1, Md1) an vorgegebenen Stellen in denjenigen Speicherbereichen (P, D) der Speichereinrichtung (1) abgelegt werden, die erfolgreich verifiziert worden sind.

10. Verfahren nach Anspruch 9, **dadurch gekennzeichnet, dass** zur Verifikation des geänderten Computerprogramms (P1) oder der geänderten Daten (D1) der inhalt an den vorgegebenen Stellen derjenigen Speicherbereiche (P, D) überprüft wird, in denen das geänderte Computerprogramm (P1) oder die geänderten Daten (D1) abgelegt worden sind.

11. Verfahren nach einem der Ansprüche 1 bis 10, **dadurch gekennzeichnet, dass** zur Verifikation des geänderten Computerprogramms (P1) oder der geänderten Daten (D1) eine Checksummenrechnung oder eine Signaturprüfung ausgeführt wird.

12. Speichereinrichtung (1) für ein Steuergerät (2) insbesondere eines Kraftfahrzeugs, auf dem ein Steuerprogramm (A0, A0', A1) abgespeichert ist, das auf einem Rechengerät (3) des Steuergeräts (2), insbesondere auf einem Mikroprozessor, ablauffähig und zur Ausführung eines Verfahrens nach einem der Ansprüche 1 bis 11 programmiert ist

13. Steuerprogramm (A0, A0', A1), das auf einem Rechengerät (3), insbesondere auf einem Mikroprozessor, eines Steuergeräts (2) ablauffähig ist, **dadurch gekennzeichnet, dass** das Steuerprogramm (A0, A0', A1) zur Ausführung eines Verfahrens nach einem der Ansprüche 1 bis 11 programmiert ist, wenn es auf dem Rechengerät (3) abläuft.

14. Steuerprogramm (A0, A0', A1) nach Anspruch 13, **dadurch gekennzeichnet, dass** das Steuerprogramm (A0, A0', A1) auf einer Speichereinrichtung (1), insbesondere auf einem Flash-Memory, abgespeichert ist.

15. Steuergerät (2) zur Steuerung oder Regelung einer Funktion, mit einer programmierbaren Speichereinrichtung (1), in der ein Computerprogramm (P0) und Daten (D0) zumindest teilweise abgelegt sind, und mit einem Rechengerät (3), insbesondere einem Mikroprozessor, wobei das Computerprogramm (P0) zur Realisierung der Steuerung oder Regelung unter Verwendung der Daten (D0) auf dem Rechengerät (3) ausführbar ist, wobei das Steuergerät Mittel umfasst, die zumindest nach einer Änderung des in der Speichereinrichtung (1) abgelegten Computerprogramms (P0) oder der in der Speichereinrichtung (1) abgelegten Daten (D0) eine Verifikation des geänderten Computerprogramms (P1) oder der geänderten Daten (D1) durchführen und eine Ausführung des geänderten Computerprogramms (P1) oder eine Verwendung der geänderten Daten (D1) so lange verhindern, bis das geänderte Computerprogramm (P1) oder die geänderten Daten (D1) erfolgreich verifiziert worden sind, **dadurch gekennzeichnet, dass** das Steuergerät zur Steuerung oder Regelung einer Funktion eines Kraftfahrzeugs dient, die Mittel zur Verifikation geänderten Computerprogramms (P1) bzw. der geänderten Daten (D1) und zur Freigabe des verifizierten Computerprogramms (P1) bzw. der verifizierten Daten (D1) als ein in der Speichereinrichtung (1) des Steuergeräts (2) abgespeichertes Steuerprogramm (A0, A0'; A1) ausgebildet sind, wobei vor der Änderung des Computerprogramms (P0) oder der Daten (D0) eine Kopie des in dem zu ändernden Speicherbereich der Speichereinrichtung (1) abgelegten Steuerprogramms (A0) als Backup (A0') in einen anderen Speicherbereich der Speichereinrichtung (1) außerhalb des im Rahmen der Änderung des Computerprogramms (P0) oder der Daten (D0) zu ändernden Speicherbereichs abgelegt wird.

16. Steuergerät (2) nach Anspruch 15, **dadurch gekennzeichnet, dass** das Steuerprogramm (A0, A0'; A1) zur Ausführung eines Verfahrens nach einem der Ansprüche 2 bis 10 programmiert ist.

## Claims

1. Method for operating a control device (2) which is intended to control or regulate a function and has a programmable memory device (1), in which the control or regulation operation is implemented by executing a computer program (P0) which is at least partially stored in a memory area of the memory device (1) and using data (D0) which are at least partially stored in a memory area of the memory device (1), in which, at least after the computer program (P0) stored in the memory area of the memory device (1) or the data (D0) stored in the memory area of the memory device (1) has/have been changed, the changed computer program (P1) is executed or the changed data (D1) are used only if the changed computer program (P1) or the changed data (D1) has/have been successfully verified, **characterized in that** the control device (2) is used to control or regulate a function of a motor vehicle, and **in that** a control program (A0') which is likewise stored in the memory device (1) causes the computer program (P0) or the data (D0) to be changed, in which case, before the computer program (P0) or the data (D0) in the memory area of the memory device (1) is/are changed, a control program (A0) stored **in that** memory area of the memory device (1) which is to be changed is copied, as a backup (A0'), to another memory area of the memory device (1) outside the memory area to be changed when changing the computer program (P0) or the data (D0).

2. Method according to Claim 1, **characterized in that**, when changing the computer program (P0) or the data (D0), at least that memory area (P, D) of the memory device (1) in which the computer program (P0) or the data (D0) is/are stored is erased, and the changed computer program (P1) or the changed data (D1) is/are then stored in the memory device (1).

3. Method according to Claim 1 or 2, **characterized in that** a memory area (P) in which the computer program (P0) or the data is/are stored is caused to be erased only if the control program (A0) has been successfully copied, as a backup (A0'), to a memory area (D) outside the memory area (P) to be erased.

4. Method according to one of Claims 1 to 3, **characterized in that** a changed control program (A1) is stored with the changed computer program (P1) or with the changed data (D1) in the memory device (1).

5. Method according to Claim 4, **characterized in that**, after a memory area (P) for the computer program has been reprogrammed, a memory area (D) for the data is caused to be erased and programmed only if the changed computer program (P1) has been successfully verified.

6. Method according to one of Claims 1 to 5, **characterized in that** the backup (A0') causes the changed computer program (P1) or the changed data (D1) to be stored in the memory device (1).

7. Method according to Claim 5, **characterized in that** the changed control program (A1) causes the changed computer program stored in the originally programmed memory area (D) which has not yet been reprogrammed or the changed data (D1) stored there to be verified.

8. Method according to one of Claims 1 to 7, **characterized in that** the result (Mp1, Md1) of the verification is stored in the control device (2) in a non-volatile manner.

9. Method according to Claim 8, **characterized in that** test patterns (Mp1, Md1) are stored at predefined locations in those memory areas (P, D) of the memory device (1) which have been successfully verified.

10. Method according to Claim 9, **characterized in that**, in order to verify the changed computer program (P1) or the changed data (D1), the contents at the predefined locations of those memory areas (P, D) in which the changed computer program (P1) or the changed data (D1) has/have been stored are checked.

11. Method according to one of Claims 1 to 10, **characterized in that**, in order to verify the changed computer program (P1) or the changed data (D1), a checksum calculation or a signature check is carried out.

12. Memory device (1) for a control device (2), in particular of a motor vehicle, which stores a control program (A0, A0', A1) which can be executed in a computing device (3) of the control device (2), in particular in a microprocessor, and has been programmed to carry out a method according to one of Claims 1 to 11.

13. Control program (A0, A0', A1) which can be executed in a computing device (3), in particular in a microprocessor, of a control device (2), **characterized in that** the control program (A0, A0', A1) has been programmed to carry out a method according to one of Claims 1 to 11 if it is executed in the computing device (3).

14. Control program (A0, A0', A1) according to Claim 13, **characterized in that** the control program (A0, A0', A1) is stored in a memory device (1), in particular in a flash memory.

15. Control device (2) which is intended to control or regulate a function and has a programmable memory device (1) in which a computer program (P0) and data (D0) are at least partially stored and a computing device (3), in particular a microprocessor, in which the computer program (P0) can be executed in the computing device (3) in order to implement the control or regulation operation using the data (D0), in which the control device comprises means which, at least after the computer program (P0) stored in the memory device (1) or the data (D0) stored in the memory device (1) has/have been changed, verify the changed computer program (P1) or the changed data (D1) and prevent the changed computer program (P1) being executed or the changed data (D1) being used until the changed computer program (P1) or the changed data (D1) has/have been successfully verified, **characterized in that** the control device is used to control or regulate a function of a motor vehicle, the means for verifying the changed computer program (P1) or the changed data (D1) and for releasing the verified computer program (P1) or the verified data (D1) are in the form of a control program (A0, A0'; A1) which is stored in the memory device (1) of the control device (2), in which case, before the computer program (P0) or the data (D0) is/are changed, a copy of the control program (A0) stored **in that** memory area of the memory device (1) to be changed is stored, as a backup (A0'), in another memory area of the memory device (1) outside the memory area to be changed when changing the computer program (P0) or the data (D0).

16. Control device (2) according to Claim 15, **characterized in that** the control program (A0, A0'; A1) has been programmed to carry out a method according to one of Claims 2 to 10.

## Revendications

1. Procédé pour faire fonctionner un appareil de commande (2) pour commander ou réguler une fonction, avec un dispositif de mémoire programmable (1), selon lequel
la commande ou la régulation est réalisée en exécutant un programme informatique (P0) stocké au moins partiellement dans une zone de mémoire du dispositif de mémoire (1) et en utilisant des données (D0) au moins partiellement stockées dans une zone de mémoire du dispositif de mémoire (1),
le programme informatique (P1) modifié n'étant exécuté ou les données (D1) modifiées n'étant utilisées, au moins après une modification du programme informatique (P0) stocké dans la zone de mémoire du dispositif de mémoire (1) ou des données (D0) stockées dans la zone de mémoire du dispositif de mémoire (1), qu'après une vérification réussie du programme informatique modifié (P1) ou des données modifiées (D1),
**caractérisé en ce que**
l'appareil de commande (2) sert à commander ou à réguler une fonction d'un véhicule automobile, et la modification du programme informatique (P0) ou des données (D0) est déclenchée par un programme de commande (A0'), également déposé dans le dispositif de mémoire (1),
et avant la modification du programme informatique (P0) ou des données (D0) dans la zone de mémoire du dispositif de mémoire (1), un programme de commande (A0) stocké dans la zone de mémoire du dispositif de mémoire (1) à modifier est copié en forme de backup (A0') dans une autre zone de mémoire du dispositif de mémoire (1), à l'extérieur de la zone de mémoire à modifier dans le cadre de la modification du programme informatique (P0) ou des données (D0).

2. Procédé selon la revendication 1,
**caractérisé en ce que**
dans le cadre de la modification du programme informatique (P0) ou des données (D0), on efface au moins celle des zones de mémoire (P, D) du dispositif de mémoire (1) dans laquelle le programme informatique (P0) ou les données (D0) sont stockés, et on stocke ensuite le programme informatique modifié (P1) ou les données modifiées (D1) dans le dispositif de mémoire (1).

3. Procédé selon la revendication 1 ou 2,
**caractérisé en ce qu'**
un effacement d'une zone de mémoire (P) dans laquelle sont stockés le programme informatique (P0) ou les données n'est déclenché que si le programme de commande (A0) a été copié en forme d'un backup (A0') dans une zone de mémoire (D) à l'extérieur de la zone de mémoire (P) à effacer.

4. Procédé selon l'une quelconque des revendications 1 à 3,
**caractérisé en ce qu'**
avec le programme informatique modifié (P1) ou avec les données modifiées (D1) un programme de commande modifié (A1) est déposé dans le dispositif de mémoire (1).

5. Procédé selon la revendication 4,
**caractérisé en ce qu'**
après une nouvelle programmation d'une zone de mémoire (P) pour le programme informatique, un effacement et une programmation d'une zone de mémoire (D) pour les données ne sont déclenchés qu'après une vérification réussie du programme informatique modifié (P1).

6. Procédé selon l'une quelconque des revendications 1 à 5,
**caractérisé en ce que**
le stockage du programme informatique modifié (P1) ou des données modifiées (d1) dans le dispositif de mémoire (1) est déclenché par le backup (A0').

7. Procédé selon la revendication 5,
**caractérisé en ce que**
la vérification du programme informatique stocké ou des données modifiées (D1) stockées dans la zone de mémoire (D) initialement pas encore reprogrammée est déclenchée par le programme de commande modifié (A1).

8. Procédé selon l'une quelconque des revendications 1 à 7,
**caractérisé en ce que**
le résultat (Mp1, Md1) de la vérification est stocké de façon non volatile dans l'appareil de commande (2).

9. Procédé selon la revendication 8,
**caractérisé en ce que**
des échantillons de contrôle (Mp1, Md1) sont enregistrés à des endroits prédéterminés dans celles des zones de mémoire (P, D) du dispositif de mémoire qui ont été vérifiées avec succès.

10. Procédé selon la revendication 9,
**caractérisé en ce que**
pour la vérification du programme informatique modifié (P1) ou des données modifiées (D1) on vérifie le contenu aux endroits prédéterminés de celles des zones de mémoire (P, D) dans lesquelles le programme informatique modifié (P1) ou les données modifiées (D1) ont été enregistrés.

11. Procédé selon l'une quelconque des revendications 1 à 10,
**caractérisé en ce que**
pour la vérification du programme informatique modifié (P1) ou des données modifiées (D1) on exécute un calcul totalisateur de contrôle ou un contrôle de signature.

12. Dispositif de mémoire (1) pour un appareil de commande (2) en particulier d'un véhicule automobile, dans lequel est déposé un programme de commande (A0, A0', A1) qui peut être exécuté dans un appareil de calcul (3) de l'appareil de commande (2), en particulier dans un microprocesseur, et est programmé pour réaliser un procédé selon l'une des revendications 1 à 11.

13. Programme de commande (A0, A', A1) pouvant être exécuté dans un appareil de calcul (3), en particulier dans un microprocesseur, d'un appareil de commande (2),
**caractérisé en ce que**
le programme de commande (A0, A0', A1) est programmé pour réaliser un procédé selon l'une des revendications 1 à 11 s'il se déroule dans l'appareil de calcul (3).

14. Programme de commande (A0, A', A1) selon la revendication 13,
**caractérisé en ce que**
le programme de commande (A0, A', A1) est stocké dans un dispositif de mémoire (1), en particulier dans une mémoire flash.

15. Appareil de commande (2) pour commander ou réguler une fonction, avec un dispositif de mémoire programmable (1) dans lequel sont stockés au moins partiellement un programme informatique (P0) et des données (D0), et avec un appareil de calcul (3), en particulier un microprocesseur,
le programme informatique (P0) pour la réalisation de la commande ou de la régulation en utilisant les données (D0) pouvant être exécuté dans l'appareil de calcul (3),
l'appareil de commande comprenant des moyens qui, au moins après une modification du programme informatique (P0) stocké dans le dispositif de mémoire (1) ou des données (D0) stockées dans le dispositif de mémoire (D0), réalisent une vérification du programme informatique modifié (P1) ou des données modifiées (D1), et empêchent une exécution du programme informatique modifié (P1) ou une utilisation des données modifiées (D1) jusqu'à ce que le programme information modifié (P1) ou les données modifiées (D1) aient été vérifiés avec succès,
**caractérisé en ce que**
l'appareil de commande sert à commander ou réguler une fonction d'un véhicule automobile, dont les moyens pour vérifier le programme informatique (P1) ou les données modifiées (D1) ou pour autoriser le programme informatique vérifié (P1) ou les données vérifiées (D1) présentent la forme d'un programme de commande (AO, A0', A1) stocké dans le dispositif de mémoire (1) de l'appareil de commande (2), et
avant la modification du programme informatique (P0) ou des données (D0), une copie du programme de commande (A0) stocké dans la zone de mémoire du dispositif de mémoire (1) à modifier est stockée en forme de back-up (A0') dans une autre zone de mémoire du dispositif de mémoire (1), à l'extérieur de la zone de mémoire à modifier dans le cadre de la modification du programme informatique (P0) ou des données (D0).

16. Appareil de commande (2) selon la revendication 15,
**caractérisé en ce que**
le programme de commande (A0, A0', A1) est programmé pour réaliser un procédé selon l'une des revendications 2 à 10.
